# FASCICULE DE BREVET EUROPEEN

(11) **EP 2 478 409 B1**
(45) Date de publication et mention de la délivrance du brevet: **09.08.2017**
(21) Numéro de dépôt: 10763798.5
(22) Date de dépôt: 02.09.2010
(51) Int. Cl.: G02F 1/01

(54) **SYSTEME DE CONTROLE DE POLARISATION TOUT-OPTIQUE A FAISCEAU DE POMPE CONTRA-PROPAGATIF**
SYSTEM ZUR ÜBERWACHUNG DER VOLLOPTISCHEN POLARISIERUNG MIT EINEM GEGENLAUFENDEN PUMPENSTRAHL
SYSTEM FOR MONITORING ALL-OPTICAL POLARIZATION HAVING A CONTRA-PROPAGATING PUMP BEAM

(30) Priorité: 17.09.2009 FR 0904451
(43) Date de publication de la demande: 25.07.2012
(73) Titulaire: Centre National de la Recherche Scientifique (C.N.R.S.), 75794 Paris Cedex 16 (FR); Université de Bourgogne, 21000 Dijon (FR)
(72) Inventeur: FATOME, Julien, 21130 Auxonne (FR); PITOIS, Stéphane, 21910 Corcelles-les-Citeaux (FR)
(74) Mandataire: Novagraaf Technologies
(86) Numéro de dépôt international: PCT/FR2010/051826
(87) Numéro de publication internationale: WO 2011/033203

(56) Documents cités:
- PITOIS S ET AL: "Polarization attraction using counter-propagating waves in optical fiber at telecommunication wavelengths", OPTICS EXPRESS, OSA (OPTICAL SOCIETY OF AMERICA), WASHINGTON DC, (US), vol. 16, no. 9, 25 avril 2008 (2008-04-25) , pages 6646-6651, XP002534764, ISSN: 1094-4087, DOI: DOI:10.1364/OE.16.006646
- PITOIS S ET AL: "New concepts based on nonlinear polarization effects and Raman amplification in optical fibers", IEEE/LEOS WINTER TOPICALS MEETING SERIES, 2009, IEEE, PISCATAWAY, NJ, USA, 12 janvier 2009 (2009-01-12), pages 223-224, XP031416710, ISBN: 978-1-4244-2610-2
- J.FATOME: "Experimental evidence of Brillouin-induced polarization wheeling in highly birefringent optical fibers", OPTICS EXPRESS 20090720 OPTICAL SOCIETY OF AMERICA USA, vol. 17, no. 15, 20 juillet 2009 (2009-07-20), pages 12612-12618, XP002578771, cité dans la demande
- THEVENAZ L ET AL: "All-Optical Polarization Control Through Brillouin Amplification", OPTICAL FIBER COMMUNICATION/NATIONAL FIBER OPTIC ENGINEERS CONFERENCE, 2008. OFC/NFOEC 2008. CONFERENCE ON, IEEE, PISCATAWAY, NJ, USA, 24 février 2008 (2008-02-24), pages 1-3, XP031391468, ISBN: 978-1-55752-856-8

## Description

### DOMAINE TECHNIQUE

La présente invention se rapporte au domaine du contrôle et de la stabilisation de la polarisation d'un signal lumineux, dans les systèmes à bases de fibres optiques (systèmes de télécommunication par fibres optiques, capteurs à fibres optiques, métrologie, régénérateurs tout-optiques, etc.).

Elle se rapporte plus particulièrement à un système de stabilisation de la polarisation d'un faisceau lumineux d'entrée, comprenant des moyens de guidage optique du faisceau lumineux d'entrée.

### ÉTAT DE LA TECHNIQUE ANTERIEURE

Dans certains domaines tels que les télécommunications, la polarisation constitue un paramètre problématique au regard des performances envisagées. En effet, il est couramment constaté une incapacité à prévoir l'état de polarisation d'un faisceau lumineux après qu'il se soit propagé le long de plusieurs kilomètres de fibre optique. Cette fluctuation de la polarisation en sortie de fibre trouve son origine dans la légère biréfringence des fibres optiques usuelles, qui suffit à modifier de manière aléatoire la polarisation de la lumière qui s'y propage. Le contrôle de la polarisation d'un signal injecté dans une fibre optique constitue donc un problème technique général, qui permettrait d'accroître les performances de nombreux systèmes optiques.

L'état de la technique comprend dans ce domaine différentes solutions pour contrôler et stabiliser l'état de polarisation d'un signal en sortie de fibre optique.

Une première solution consiste à utiliser un dispositif dissipatif, tel que par exemple un polariseur de Glan. Ce type de dispositif permet de disposer en sortie de fibre d'un faisceau à polarisation constante.

Néanmoins, un tel dispositif présente l'inconvénient de faire dépendre l'intensité du faisceau de sortie directement de l'état de polarisation du signal d'entrée. Dès lors, les fluctuations de polarisation du signal d'entrée entraînent des fluctuations d'intensité du signal de sortie, ce qui n'est pas satisfaisant pour la plupart des applications envisagées.

Une seconde solution consiste à utiliser un dispositif de rétro-contrôle électronique, comme décrit par exemple dans le document de brevet US 7,307,722 B2. Un tel dispositif comporte un élément optique de contrôle apte à transformer l'état de polarisation du signal d'entrée en un autre état de polarisation, sans perte. Un élément électronique disposé ensuite permet de mesurer et d'analyser ce nouvel état de polarisation. A partir du résultat de l'analyse, l'élément électronique de mesure et d'analyse transmet à l'élément optique de contrôle des instructions en vue de stabiliser la polarisation du signal de sortie sur un état prédéterminé.

Ce dispositif présente cependant l'inconvénient de mettre en oeuvre une composante électronique en relation avec celle optique. Du fait du temps de réponse élevé de l'élément électronique, ce dispositif ne permet donc pas de contrôler ni de stabiliser des signaux d'entrée dont la polarisation varie à une vitesse supérieure à un certain seuil déterminé par ce temps de réponse électronique.

Une autre solution, décrite dans le document [FATOME J. ET AL, « Expérimental evidence of Brillouin-induced polarization wheeling in highly biréfringent optical fibers », OPTICS EXPRESS 20090720 OPTICAL SOCIETEY OF AMERICA USA, vol. 17, No 15, 20 Juillet 2009, pages 12612-12618], consiste à utiliser la rétro-diffusion Brillouin au sein d'une fibre optique fortement biréfringente afin de saturer et d'égaliser la puissance optique sur chacun des deux axes de la fibre. Ce dispositif permet ainsi d'attirer tout état de polarisation du faisceau d'entrée vers un état de polarisation situé aléatoirement sur l'équateur de la sphère de Poincaré. Ce système étant basé sur la rétro-diffusion Brillouin, il est nécessaire que le spectre du faisceau d'entrée soit le plus étroit possible. Cette restriction limite en pratique l'utilisation de ce dispositif à des ondes continues ou quasi-continues et exclut de fait les applications à des trains d'impulsions télécoms. De plus, la position de la polarisation de sortie sur l'équateur de la sphère de Poincaré, et qui est liée à la différence de phase entre les deux composantes de polarisation linéaires (les deux axes de la fibre), reste un paramètre libre du système qui varie de manière aléatoire au cours du temps. Finalement, ce dispositif est fortement dissipatif et seule une faible fraction (quelques pourcents) de la puissance optique du faisceau d'entrée émerge du système.
Dans le document Pitois et al. « Polarization attraction using counter-propagating waves in optical fiber at télécommunication wavelengths, OPTICS EXPRESS, OSA (OPTICAL SOCIETY OF AMERICA), WASHINGTON DC, (US), vol. 16, no. 9, 25 avril 2008, pages 6646-6651, est décrit une observation expérimentale d'un processus d'attraction de polarisation ayant lieu dans des fibres optiques à des longueurs d'onde de télécommunication. En particulier, un système de stabilisation de la polarisation d'un faisceau lumineux d'entrée comprend des moyens de guidage optique du faisceau lumineux d'entrée présentant une non-linéarité de type Kerr et le système comprend comprenant également des moyens de génération d'un faisceau lumineux continu de pompe dont la polarisation est fixe au cours du temps et dont le spectre est adapté pour minimiser la diffusion Brillouin au sein des moyens de guidage optique, les moyens de génération étant agencés de sorte que les faisceaux lumineux d'entrée et de pompe soient contra-propagatifs au sein des moyens de guidage optique.
Ainsi, aucune solution de l'état de la technique ne permet de disposer d'un système de stabilisation de polarisation tout-optique qui puisse stabiliser parfaitement un état de polarisation, tout en ne subissant aucune perte dépendante de la polarisation d'entrée et en étant susceptible de fonctionner avec des temps de réponses très faibles (typiquement inférieurs à la dizaine de microsecondes).

### OBJET DE L'INVENTION

Le but de la présente invention est de remédier à ce problème technique, en permettant une stabilisation d'un état de polarisation d'une onde lumineuse de manière tout-optique, notamment sans élément de rétro-contrôle électronique. Elle se fonde pour cela sur l'interaction non-linéaire de deux ondes contra-propagatives dans un milieu non-linéaire.

Dans ce but, l'objet de la présente invention concerne un système de stabilisation de la polarisation d'un faisceau lumineux d'entrée, comprenant des moyens de guidage optique du faisceau lumineux d'entrée. Dans ce système les moyens de guidage optique présentent une non-linéarité de type Kerr et une faible dispersion des modes de polarisation. De plus, ce système comprend également des moyens de génération d'un faisceau lumineux de pompe dont la polarisation est fixe au cours du temps et dont le spectre est adapté pour minimiser la diffusion Brillouin au sein des moyens de guidage optique. Ces moyens de génération sont agencés de sorte que les faisceaux lumineux d'entrée et de pompe soient contra-propagatifs au sein des moyens de guidage optique.

Ce système de stabilisation, combinant avantageusement un guide d'onde non-linéaire, des faisceaux d'entrée et de pompe contra-propagatifs, ainsi qu'un ajustement judicieux du spectre du faisceau de pompe, permet d'attirer l'état de polarisation en sortie du guide d'onde vers un état de polarisation bien déterminé, fixé uniquement par la biréfringence résiduelle du guide et par l'état de polarisation de la pompe. Ces deux paramètres ne variant pas avec le temps, l'état de polarisation en sortie de fibre est donc parfaitement stabilisé. Parallèlement, ce système de stabilisation entrainant un échange d'entropie entre les faisceaux pompe et signal, les fluctuations de polarisation sont transférées du signal d'entrée sur le faisceau de pompe et inversement. En conséquence, l'invention peut également être employée pour brouiller la polarisation d'un faisceau lumineux ou lui imposer une séquence particulière d'états de polarisation.

De plus, la stabilisation de la polarisation se fait de manière tout-optique, sans aucun dispositif de rétro-contrôle électronique, ce qui offre la possibilité d'obtenir des temps de réponse inférieurs à la dizaine de microsecondes. Enfin, ce système de stabilisation n'introduit pas de pertes dépendantes de la polarisation du signal d'entrée.

L'objet de cette invention témoigne d'une approche innovante en matière d'interaction de deux ondes contra-propagatives. En effet, s'il peut être connu d'utiliser une fibre optique parfaitement isotrope en tant qu'attracteur de polarisation, par le biais de deux ondes contra-propagatives, une telle fibre isotrope ne peut raisonnablement dépasser une longueur supérieure à quelques mètres et être maintenue parfaitement droite et sans aucune torsion. Dès lors, du fait des faibles longueurs de fibre, les puissances nécessaires à l'observation de l'attraction de polarisation dépassent nécessairement quelques dizaines ou centaines de Watts, ce qui est incompatible avec des applications en télécommunications où la puissance ne dépasse pas un Watt. De plus, les sources pompe et signal doivent nécessairement être des sources pulsées nanosecondes, ce qui limite l'intérêt en termes d'applications envisagées. Finalement, avec une fibre isotrope, il est nécessaire que l'onde de pompe ait une polarisation parfaitement circulaire pour que l'attraction de la polarisation du faisceau d'entrée ait lieu vers un état unique.

Or, la présente invention permet d'utiliser des fibres de grande longueur, bien que de telles fibres doivent être enroulées sur elles-mêmes au sein d'une bobine et donc ne peuvent être isotropes. L'approche de la solution faisant l'objet de la présente invention consiste pour cela à considérer que la fibre est isotrope par morceaux et que l'effet de stabilisation observé réside dans la succession d'un grand nombre d'attracteurs de polarisation répartis tout au long de la fibre. De plus, dans la présente invention, l'état de polarisation du faisceau de pompe n'a pas d'obligation d'être circulaire et, par conséquent, le signal d'entrée peut être attiré vers n'importe quel état de polarisation imposé par celui de la pompe.

Le seuil de diffusion Brillouin est un paramètre inhérent aux moyens de guidage optique du système, qui a pour effet de limiter la puissance effective pouvant se propager au sein de ce moyen de guidage. Il est possible que le faisceau lumineux de pompe présente directement un spectre adapté à la minimisation de la diffusion Brillouin, c'est-à-dire un spectre n'engendrant qu'un faible taux de rétro-diffusion Brillouin pour la puissance de pompe utilisée.

Cependant, il est fort possible que cela ne soit pas le cas. Dès lors, aux fins d'ajuster correctement ce spectre, les moyens de génération sont associés à des moyens d'adaptation du spectre du faisceau lumineux de pompe visant à minimiser la diffusion Brillouin au sein des moyens de guidage optique.

Plus précisément, cette adaptation du spectre du faisceau lumineux de pompe consiste à régler la largeur de ce spectre de sorte à éliminer le phénomène de rétro-diffusion Brillouin dans les moyens de guidage optique.

Selon un premier mode particulier de réalisation, les faisceaux lumineux d'entrée et de pompe présentent des spectres centrés sur des longueurs d'onde sensiblement égales.

Selon un second mode particulier de réalisation, les faisceaux lumineux d'entrée et de pompe présentent des spectres centrés sur des longueurs d'onde différentes. En décalant ainsi la longueur d'onde du faisceau de pompe vers les basses fréquences, il est rendu possible de combiner la stabilisation de la polarisation et l'amplification du faisceau par effet Raman stimulé.

De préférence, les faisceaux lumineux d'entrée et de pompe présentent des puissances lumineuses moyennes sensiblement égales. On s'assure alors d'une efficacité optimale du système.

Dans chacun des cas, les faisceaux peuvent être constitués d'ondes continues, éventuellement incohérentes, ou de trains d'impulsions, codés ou non codés.

Avantageusement, le système comprend des moyens d'adaptation du spectre du faisceau lumineux d'entrée pour minimiser la diffusion Brillouin au sein des moyens de guidage optique. Ces moyens sont analogues à ceux d'adaptation du faisceau lumineux de pompe, qui permettent d'adapter de manière optimale le spectre du faisceau lumineux d'entrée pour minimiser la diffusion Brillouin au sein des moyens de guidage optique et ainsi d'éliminer le phénomène de rétro-diffusion Brillouin.

Selon une variante particulière de réalisation, les moyens de guidage optique comportent au moins une fibre optique.

Dans le cas de plusieurs fibres optiques, les moyens de guidage optique comportent de préférence au moins deux fibres optiques présentant des caractéristiques différentes. Ces fibres, agencées correctement (par exemple par soudage les unes aux autres) et avec des propriétés (paramètre de coeur, de dopage, etc.) différentes, permettent d'induire des diffusions Brillouin à des longueurs d'onde différentes. En conséquence, les contributions de chaque fibre à la diffusion Brillouin totale ne s'ajoutant pas, la bande de gain Brillouin effective est dès lors élargie et le seuil Brillouin diminué. Cette réalisation rend ainsi possible d'augmenter la puissance de pompe ou de diminuer la largeur spectrale de pompe.

L'utilisation d'un ensemble de fibres optiques soudées les unes aux autres par leurs extrémités peut également servir à gérer la dispersion chromatique du moyen de guidage afin de réaliser un attracteur de polarisation adapté aux hauts débits. En effet, une dispersion chromatique totale du moyen de guidage proche de zéro permet de ne pas élargir temporellement les impulsions lumineuses.

Afin de réaliser un système de stabilisation entièrement fibré, il peut être prévu que le faisceau lumineux d'entrée soit injecté dans un moyen de guidage optique, ce moyen de guidage supplémentaire étant associé aux moyens de génération du faisceau lumineux de pompe via un ensemble de moyens de guidage optique. On comprendra ici que cet ensemble de moyens de guidage comprend les moyens de guidage optique aux propriétés non-linéaires de type Kerr et faible dispersion des modes de polarisation.

Selon différentes variantes de réalisation des moyens de génération du faisceau lumineux de pompe, ceux-ci peuvent comporter :
- un agencement d'amplificateurs, de filtres optiques passe-bande et de polariseurs,
- une source laser, ou
- des moyens de récupération d'une partie du faisceau lumineux d'entrée et des moyens de polarisation de ce faisceau récupéré.

Selon un mode particulier de réalisation, le système comprend des moyens d'évacuation du faisceau lumineux de pompe après passage dans les moyens de guidage optique.

Dans ce dernier cas, il peut être prévu que :
- si les faisceaux lumineux d'entrée et de pompe présentent des spectres centrés sur des longueurs d'onde sensiblement égales, les moyens d'évacuation comprennent un circulateur, ou
- si les faisceaux lumineux d'entrée et de pompe présentent des spectres centrés sur des longueurs d'onde différentes, les moyens d'évacuation comprennent un coupleur multi-longueurs d'onde.

Selon un autre mode particulier de réalisation, le système comprend des moyens de sortie du faisceau lumineux d'entrée après passage dans les moyens de guidage optique.

Dans ce dernier cas, il peut être prévu que :
- si les faisceaux lumineux d'entrée et de pompe présentent des spectres centrés sur des longueurs d'onde sensiblement égales, les moyens de sortie comprennent un circulateur, ou
- si les faisceaux lumineux d'entrée et de pompe présentent des spectres centrés sur des longueurs d'onde différentes, les moyens de sortie comprennent un coupleur multi-longueurs d'onde.

### BREVE DESCRIPTION DES DESSINS

L'invention sera mieux comprise à la lecture de la description détaillée d'un exemple non limitatif de réalisation, accompagnée de figures représentant respectivement :
- la figure 1, un schéma d'un système de stabilisation de polarisation selon un premier mode de réalisation de l'invention,
- la figure 2, un schéma d'une variante de réalisation des moyens de génération du faisceau lumineux de pompe,
- la figure 3, un schéma d'un système de stabilisation de polarisation selon un second mode de réalisation de l'invention, et
- la figure 4, un schéma d'un système de stabilisation de polarisation selon un troisième mode de réalisation de l'invention.

Pour plus de clarté, les éléments identiques ou similaires sont repérés par des signes de référence identiques sur l'ensemble des figures.

### EXPOSE DETAILLE DE MODES DE REALISATION PARTICULIERS

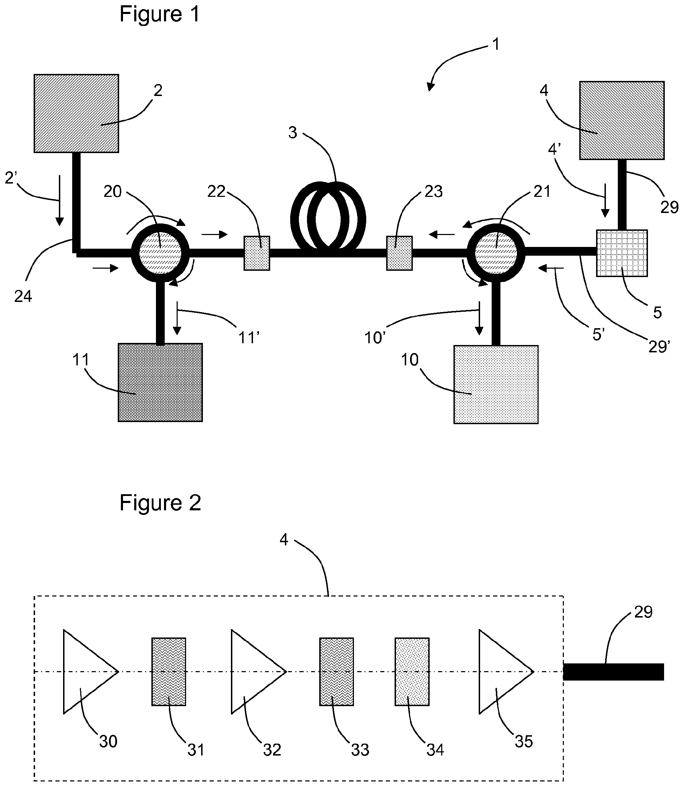

En référence à la figure 1, un système de stabilisation de polarisation d'un faisceau lumineux d'entrée, selon un premier mode de réalisation de l'invention, comprend :
- des moyens de guidage optique 3, 24 et 29,
- un moyen de génération 4 d'un faisceau lumineux de pompe 4',
- des moyens d'évacuation 11 et 20 du faisceau de pompe 4' après passage dans le moyen de guidage 3,
- des moyens de sortie 10 et 21 du faisceau d'entrée 2' après passage dans le moyen de guidage 3,
- un moyen d'adaptation 5 du spectre du faisceau de pompe 4', et
- des connecteurs 22 et 23.

Ce système 1 vise à stabiliser et contrôler la polarisation du signal d'entrée 2'. Ce signal peut provenir d'un générateur 2 de signaux, par exemple une diode laser émettant un faisceau lumineux continu. Le signal d'entrée peut être une onde continue, éventuellement incohérente, ou un train d'impulsions, par exemple un train d'impulsion Télécom codé de type PRBS (« séquence de bits pseudo aléatoires », soit « pseudo random bit sequence » en langue anglo-saxonne). Le débit et le format de modulation de ce signal peuvent être quelconques.

Le moyen de guidage 3 peut être une fibre commerciale de type NZ-DSF, qui présente une dispersion de vitesse de groupe de 1,8 picoseconde par nanomètre par kilomètre (ps/nm/km) et une dispersion des modes de polarisation (PMD) de 0,03 picoseconde par racine de kilomètres (ps.km^{-1/2}). Son aire efficace est voisine de 50 micromètres au carré (µm²) et sa longueur peut être de l'ordre de 20 kilomètres.

Cette fibre optique présente nécessairement une non-linéarité de type Kerr et une faible dispersion des modes de polarisation (PMD). Cette faible valeur de dispersion pourra s'entendre d'une valeur sensiblement comprise entre 0,001 et 0,07 picoseconde par racine de kilomètres (ps.km^{-1/2}). Cette valeur rend possible le fait que la condition d'accord de phase nécessaire à l'échange d'énergie entre les ondes soit réalisée localement. En effet, l'attraction de polarisation est reliée à un processus de mélange à quatre ondes (deux photons de polarisations circulaires droite et gauche pour l'onde pompe et autant pour l'onde d'entrée). Le fait que la polarisation de la pompe varie continûment tout au long de sa propagation dans la fibre n'est pas un obstacle à la stabilisation (attraction) de la polarisation du signal. Il s'agit d'un processus moyenné sur la longueur de la fibre. La dispersion de la fibre n'a pas d'influence directe majeure sur l'efficacité du processus d'attraction de la polarisation. Cependant, lorsque le signal est un train d'impulsions picosecondes, une dispersion cumulée faible permet d'éviter un élargissement significatif des impulsions.

Le moyen de génération 4 permet de générer un faisceau lumineux de pompe 4'. Il doit également être tel que l'onde pompe 4' présente une polarisation fixe au cours du temps. Cette source peut être par exemple un laser à fibre, connecté directement à la fibre optique 29, elle-même connectée au moyen d'adaptation 5.

Ce moyen d'adaptation 5 n'est utile que dans le cas où le spectre du faisceau de pompe en sortie du moyen 4 n'est pas déjà adapté pour minimiser la diffusion Brillouin inhérent à la fibre optique 3. Si l'adaptation n'est pas réalisée, ce moyen 5 règle correctement la largeur du spectre pour remplir cette condition. Cette adaptation permet alors d'éviter des phénomènes de rétro-diffusion au sein de la fibre 3, ce qui aurait pour conséquence un retour d'une partie du faisceau de pompe 4' et donc un faisceau de pompe contra-propagatif 4' affaibli au sein de la fibre 3 et finalement un moins bon contrôle de la polarisation du faisceau d'entrée 2' sous l'effet du faisceau de pompe 4'.

S'il s'agit de rétrécir le spectre du faisceau de pompe 4', ce moyen 5 peut être constitué d'un filtre optique passe-bande. S'il s'agit au contraire d'élargir le spectre de ce faisceau 4', ce moyen 5 peut être constitué d'un modulateur de phase et/ou d'un compresseur d'impulsions.

Typiquement, une largeur de 10 GigaHertz est suffisante pour pouvoir injecter une onde pompe d'une puissance moyenne d'un Watt dans 20 kilomètres de fibre optique standard. On s'assure ainsi que l'onde pompe possède une largeur spectrale suffisamment grande pour se placer au-dessous du seuil de diffusion Brillouin.

Dans ce mode de réalisation, les spectres des faisceaux d'entrée 2' et de pompe 4' sont centrés sur des longueurs d'onde sensiblement égales.

Afin que les faisceaux d'entrée 2' et de pompe 4' puissent être contra-propagatifs au sein de la fibre 3, ces deux faisceaux sont injectés de part et d'autre de cette fibre, avec des directions opposées.

Plus précisément, l'onde d'entrée 2' est injectée dans une fibre optique 24, afin d'être guidée jusque dans un circulateur 20, dont le but est d'évacuer le faisceau de pompe 4', après passage dans la fibre 3, jusque dans l'élément d'évacuation 11. Ce circulateur 20 est relié à la fibre optique 3 via le connecteur 22.

De l'autre côté du système, le faisceau de pompe 4', généré par la source 4, est dirigé vers le moyen d'adaptation 5 via la fibre 29, où son spectre est rétréci ou élargi en fonction de la valeur du seuil de diffusion Brillouin inhérent à la fibre 3. Le faisceau est ensuite dirigé vers un circulateur 21 via la fibre 29'. Ce nouveau circulateur 21 a pour but de permettre au faisceau d'entrée, après passage dans la fibre 3, de sortir en direction de l'élément de sortie 10 en vue de former le signal de sortie dont la polarisation a été contrôlée vis-à-vis du signal d'entrée 2'. Il est relié à la fibre optique 3 via le connecteur 23.

Dès lors, les deux signaux - d'entrée et de pompe - peuvent se propager à l'intérieur de la fibre 3 dans des directions contraires. Le signal d'entrée sort de la fibre 3 vers le connecteur 23 pour être dirigé vers la sortie 10. Le signal de pompe sort quant à lui de la fibre 3 vers le connecteur 22 pour être dirigé vers l'évacuateur 11.

Afin que l'efficacité de ce système soit optimale, l'onde d'entrée 2' et l'onde de pompe 4' présentent des puissances moyennes comparables.

Les circulateurs 20 et 21 peuvent être également réalisés par exemple avec un coupleur et un isolateur ou à l'air libre avec une lame séparatrice.

La figure 2 représente une variante de réalisation du moyen de génération 4. Dans cette variante, cette source est réalisée à partir d'amplificateurs à fibre dopée Erbium (EDFA) et de filtres optiques passe-bande et d'un polariseur.

A cet effet, un premier amplificateur 30 est utilisé « à vide », c'est-à-dire sans aucun signal d'entrée. Ce régime de fonctionnement permet d'obtenir une source laser continue fortement incohérente ayant une largeur spectrale d'environ 3,5 TéraHertz et une puissance moyenne de 50 milliWatts. Un premier filtre optique passe-bande 31 permet de réduire la largeur spectrale à une valeur d'environ 60 GigaHertz.

Un deuxième amplificateur 32 suivi d'un autre filtre optique passe-bande 33 permet d'obtenir une onde laser faiblement cohérente, non polarisée, centrée sur 1545 nanomètres, ayant une largeur spectrale voisine de 30 Giga Hertz et une puissance moyenne de l'ordre de 45 milliWatts.

Un polariseur 34 est inséré après le filtre afin de polariser cette onde de pompe.

Finalement, un dernier amplificateur 35 permet d'atteindre, si nécessaire, des puissances moyennes de quelques centaines de milliWatts.

Cette source 4, telle que décrite dans cette variante, pourra néanmoins être simplifiée (moins d'étages) si besoin.

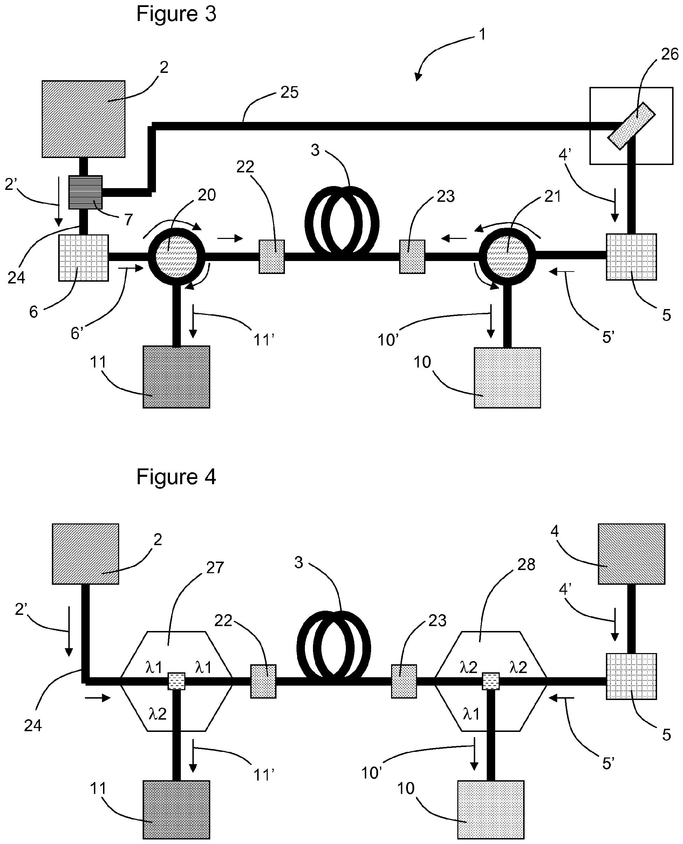

On décrit à présent un système de stabilisation de polarisation selon un second mode de réalisation de l'invention, en référence à la figure 3.

Dans ce mode de réalisation, les spectres des faisceaux d'entrée 2' et de pompe 4' sont toujours centrés sur des longueurs d'onde sensiblement égales. Il est donc toujours possible d'utiliser les circulateurs 20 et 21.

Ce système comprend, en plus de celui selon le premier mode de réalisation décrit ci-dessus, un moyen d'adaptation 6 du spectre du faisceau lumineux d'entrée 2' pour minimiser la diffusion Brillouin dans la fibre optique 3. Ce moyen 6 permet d'éviter un retour d'une partie du signal par rétro-diffusion Brillouin, ce qui permet une meilleure contra-propagation du faisceau d'entrée 2' au sein de la fibre 3 et donc un meilleur contrôle de la polarisation du faisceau d'entrée 2' sous l'effet du faisceau de pompe 4'.

De plus, ce système comprend également des moyens de récupération d'une partie du faisceau lumineux d'entrée 2' et des moyens de récupération de ce faisceau récupéré. Les moyens de récupération peuvent être par exemple constitués d'une lame 7 non entièrement transparente disposée à 45° et d'une fibre optique 25. Dans un autre mode de réalisation, les éléments 7, 24 et 25 peuvent être remplacés par une fibre optique double coeur (en tant que coupleur 50-50), l'un étant dirigé vers le moyen d'adaptation 6, l'autre vers le les moyens de polarisation. Les moyens de polarisation peuvent être constitués d'un polariseur 26.

Cette disposition permet alors de s'affranchir d'une source génératrice du faisceau de pompe, ce dernier étant généré à partir du faisceau d'entrée et éventuellement amplifié par la suite. Le moyen de génération 4 comprend ainsi, dans ce mode de réalisation, les moyens 7, 25 et 26.

On décrit enfin un système de stabilisation de polarisation selon un troisième mode de réalisation de l'invention, en référence à la figure 4.

Dans ce mode de réalisation, les spectres des faisceaux d'entrée 2' et de pompe 4' sont toujours centrés sur des longueurs d'onde différentes, ce qui permet de combiner la stabilisation de la polarisation et l'amplification du faisceau de sortie par effet Raman stimulé.

Il n'est alors plus possible d'utiliser les circulateurs 20 et 21, qui sont remplacés par des coupleurs multi-longueurs d'onde 27 et 28, tandis que les autres éléments du système restent identiques par rapport à ceux du système selon le deuxième mode de réalisation précédemment décrit.

Plus précisément, l'onde d'entrée étant à la longueur d'onde λ1 et l'onde de pompe à la longueur d'onde λ2, le coupleur 27 permet de diriger vers l'évacuateur 11 le signal à la longueur d'onde λ2 (i.e. le signal de pompe après passage dans la fibre optique non-linéaire 3) et le coupleur 28 permet de diriger vers la sortie 10 le signal à la longueur d'onde λ1 (i.e. le signal d'entrée après passage dans la fibre optique non-linéaire 3).

La présente invention permet d'envisager d'augmenter les performances des systèmes de télécommunication par fibres optiques en relâchant les contraintes vis-à-vis de la polarisation. Elle ouvre ainsi de nouvelles voies pour la compensation de la dispersion des modes de polarisation induite par la biréfringence résiduelle des fibres optiques (effet limitatif pour les transmissions actuelles à haut débit) ou encore l'amélioration des systèmes basés sur une détection cohérente. De manière plus générale, l'invention permet d'envisager d'accélérer la réalisation de réseaux plus transparents (tout optiques) par la migration des réseaux de télécommunication vers des technologies à circuits optiques intégrés, aujourd'hui fortement dépendantes de la polarisation du signal d'entrée.

Les modes de réalisation précédemment décrits de la présente invention sont donnés à titre d'exemples et ne sont nullement limitatifs. Il est entendu que l'homme du métier est à même de réaliser différentes variantes de l'invention sans pour autant sortir du cadre du brevet.

En particulier, la fibre optique 3 décrite ci-dessus peut être découpée en un ensemble de fibres optiques soudées les unes aux autres par leurs extrémités respectives, et dont les caractéristiques physiques (paramètres de coeur, de dopage, etc.) sont différentes, ce qui permet de limiter le phénomène de rétro-diffusion Brillouin par l'élargissement de la bande de gain Brillouin effective et donc l'augmentation du niveau de seuil. Dans ce même but, on peut également appliquer une ou des contraintes mécaniques ou thermiques le long de la fibre optique 3 afin d'élargir la bande de gain Brillouin et d'augmenter son niveau de seuil.

L'utilisation d'un ensemble de fibres optiques soudées les unes aux autres par leurs extrémités peut également servir à gérer la dispersion chromatique du moyen de guidage afin de réaliser un attracteur de polarisation adapté aux hauts débits. En effet, une dispersion chromatique totale du moyen de guidage proche de zéro permettrait de ne pas élargir temporellement les impulsions lumineuses picosecondes.

## Revendications

1. Système (1) de stabilisation de la polarisation d'un faisceau lumineux d'entrée (2'), comprenant des moyens de guidage optique (3) du faisceau lumineux d'entrée (2'), lesdits moyens de guidage optique (3) présentant une non-linéarité de type Kerr et le système (1) comprenant également des moyens de génération (4) d'un faisceau lumineux continu de pompe (4') dont la polarisation est fixe au cours du temps et dont le spectre est adapté pour minimiser la diffusion Brillouin au sein desdits moyens de guidage optique (3), lesdits moyens de génération (4) étant agencés de sorte que les faisceaux lumineux d'entrée (2') et de pompe (4') soient contra-propagatifs au sein desdits moyens de guidage optique (3), **caractérisé en ce que** lesdits moyens de guidage optique (3) présentent une faible dispersion des modes de polarisation comprise entre 0, 001 et 0,07 picoseconde par racine de kilomètres..

2. Système (1) selon la revendication 1, dans lequel les moyens de génération (4) sont associés à des moyens d'adaptation (5) du spectre du faisceau lumineux de pompe (4') au seuil de diffusion Brillouin au sein des moyens de guidage optique (3).

3. Système (1) selon la revendication 1 ou 2, dans lequel l'adaptation du spectre du faisceau lumineux de pompe (4') consiste à régler la largeur dudit spectre de sorte à éliminer le phénomène de diffusion Brillouin dans les moyens de guidage optique (3).

4. Système (1) selon l'une des revendications 1 à 3, dans lequel les faisceaux lumineux d'entrée (2') et de pompe (4') présentent des spectres centrés sur des longueurs d'onde sensiblement égales.

5. Système (1) selon l'une des revendications 1 à 3, dans lequel les faisceaux lumineux d'entrée (2') et de pompe (4') présentent des spectres centrés sur des longueurs d'onde différentes.

6. Système (1) selon l'une des revendications précédentes, dans lequel les faisceaux lumineux d'entrée (2') et de pompe (4') présentent des puissances lumineuses moyennes sensiblement égales.

7. Système (1) selon l'une des revendications précédentes, comprenant moyens d'adaptation (6) du spectre du faisceau lumineux d'entrée (2') pour minimiser la diffusion Brillouin au sein des moyens de guidage optique (3).

8. Système (1) selon l'une des revendications précédentes, dans lequel les moyens de guidage optique (3) comportent au moins une fibre optique (3).

9. Système (1) selon la revendication précédente, dans lequel les moyens de guidage optique (3) comportent au moins deux fibres optiques (3) présentant des caractéristiques différentes.

10. Système (1) selon l'une des revendications précédentes, dans lequel le faisceau lumineux d'entrée (2') est injecté dans un moyen de guidage optique (24), ledit moyen (24) étant associé aux moyens de génération (4) du faisceau lumineux de pompe (4') via un ensemble de moyens de guidage optique.

11. Système (1) selon l'une des revendications 1 à 10, dans lequel les moyens de génération (4) du faisceau lumineux de pompe (4') comportent un agencement d'amplificateurs (30,32,35), de filtres optiques passe-bande (31,33) et de polariseurs (34).

12. Système (1) selon l'une des revendications 1 à 10, dans lequel les moyens de génération (4) du faisceau lumineux de pompe (4') comportent une source laser.

13. Système (1) selon l'une des revendications 1 à 10, dans lequel les moyens de génération (4) du faisceau lumineux de pompe (4') comportent des moyens de récupération (7,25) d'une partie du faisceau lumineux d'entrée (2') et des moyens de polarisation (26) dudit faisceau (2').

14. Système (1) selon l'une des revendications précédentes, comprenant des moyens d'évacuation (11,20;11,27) du faisceau lumineux de pompe après passage dans les moyens de guidage optique (3).

15. Système (1) selon la revendication 14, en dépendance de la revendication 4, dans lequel les moyens d'évacuation (11,20;11,27) comprennent un circulateur (20).

16. Système (1) selon la revendication 14, en dépendance de la revendication 5, dans lequel les moyens d'évacuation (11,20;11,27) comprennent un coupleur multi-longueurs d'onde (27).

17. Système (1) selon l'une des revendications précédentes, comprenant des moyens de sortie (10,21;10,28) du faisceau lumineux d'entrée après passage dans les moyens de guidage optique (3).

18. Système (1) selon la revendication 17, en dépendance de la revendication 4, dans lequel les moyens de sortie (10,21;10,28) comprennent un circulateur (21).

19. Système (1) selon la revendication 17, en dépendance de la revendication 5, dans lequel les moyens de sortie (10,21;10,28) comprennent un coupleur multi-longueurs d'onde (28).

## Patentansprüche

1. System (1) zur Stabilisierung der Polarisierung eines Eingangslichtbündels (2'), umfassend Mittel zur optischen Führung (3) des Eingangslichtbündels (2'), wobei die Mittel zur optischen Führung (3) eine NichtLinearität vom Typ Kerr aufweisen, und das System (1) auch Mittel zur Erzeugung (4) eines kontinuierlichen Pumpenlichtbündels (4') umfasst, dessen Polarisierung im Laufe der Zeit fixiert ist, und dessen Spektrum ausgelegt ist, um die Brillouin-Diffusion innerhalb der Mittel zur optischen Führung (3) zu minimieren, wobei die Mittel zur Erzeugung (4) derart angeordnet sind, dass die Eingangs- (2') und Pumpenlichtbündel (4') innerhalb der Mittel zur optischen Führung (3) gegenläufig sind, **dadurch gekennzeichnet, dass** die Mittel zur optischen Führung (3) eine geringe Dispersion der Polarisierungsmodi aufweisen, die zwischen 0,001 und 0,07 Pikosekunden pro Wurzel der Kilometer liegt.

2. System (1) nach Anspruch 1, wobei die Mittel zur Erzeugung (4) mit Mitteln zur Anpassung (5) des Spektrums des Pumpenlichtbündels (4') an den Boden der Brillouin-Diffusion innerhalb der Mittel zur optischen Führung (3) assoziiert sind.

3. System (1) nach Anspruch 1 oder 2, wobei die Anpassung des Spektrums des Pumpenlichtbündels (4') darin besteht, die Breite des Spektrums einzustellen, um das Phänomen der Brillouin-Diffusion in den Mitteln zur optischen Führung (3) zu beseitigen.

4. System (1) nach einem der Ansprüche 1 bis 3, wobei die Eingangs- (2') und Pumpenlichtbündel (4') Spektren aufweisen, die auf im Wesentlichen gleichen Wellenlängen zentriert sind.

5. System (1) nach einem der Ansprüche 1 bis 3, wobei die Eingangs- (2') und Pumpenlichtbündel (4') Spektren aufweisen, die auf verschiedenen Wellenlängen zentriert sind.

6. System (1) nach einem der vorhergehenden Ansprüche, wobei die Eingangs- (2') und Pumpenlichtbündel (4') im Wesentlichen gleiche mittlere Leuchtkräfte aufweisen.

7. System (1) nach einem der vorhergehenden Ansprüche, umfassend Mittel zur Anpassung (6) des Spektrums des Eingangslichtbündels (2'), um die Brillouin-Diffusion innerhalb der Mittel zur optischen Führung (3) zu minimieren.

8. System (1) nach einem der vorhergehenden Ansprüche, wobei die Mittel zur optischen Führung (3) mindestens eine Lichtleitfaser (3) umfassen.

9. System (1) nach dem vorhergehenden Anspruch, wobei die Mittel zur optischen Führung (3) mindestens zwei Lichtleitfasern (3) umfassen, die verschiedene Eigenschaften aufweisen.

10. System (1) nach einem der vorhergehenden Ansprüche, wobei das Eingangslichtbündel (2') in ein Mittel zur optischen Führung (24) eingeführt wird, wobei das Mittel (24) mit Mitteln zur Erzeugung (4) des Pumpenlichtbündels (4') über eine Einheit von Mitteln zur optischen Führung assoziiert ist.

11. System (1) nach einem der Ansprüche 1 bis 10, wobei die Mittel zur Erzeugung (4) des Pumpenlichtbündels (4') eine Anordnung von Verstärkern (30, 32, 35), optischen Tiefpassfiltern (31, 33) und Polarisatoren (34) umfassen.

12. System (1) nach einem der Ansprüche 1 bis 10, wobei die Mittel zur Erzeugung (4) des Pumpenlichtbündels (4') eine Laserquelle umfassen.

13. System (1) nach einem der Ansprüche 1 bis 10, wobei die Mittel zur Erzeugung (4) des Pumpenlichtbündels (4') Mittel zur Wiedergewinnung (7, 25) eines Teils des Eingangslichtbündels (2') und Polarisationsmittel (26) des Bündels (2') umfassen.

14. System (1) nach einem der vorhergehenden Ansprüche, umfassend Mittel zur Evakuierung (11, 20; 11, 27) des Pumpenlichtbündels nach dem Durchgang in die Mittel zur optischen Führung (3).

15. System (1) nach Anspruch 14 in Abhängigkeit von Anspruch 4, wobei die Mittel zur Evakuierung (11, 20; 11, 27) einen Zirkulator (20) umfassen.

16. System (1) nach Anspruch 14 in Abhängigkeit von Anspruch 5, wobei die Mittel zur Evakuierung (11, 20; 11, 27) einen Mehrfachwellenlängen-Koppler (27) umfassen.

17. System (1) nach einem der vorhergehenden Ansprüche, umfassend Mittel zum Ausgang (10, 21; 10, 28) des Eingangslichtbündels nach dem Durchgang in die Mittel zur optischen Führung (3).

18. System (1) nach Anspruch 17 in Abhängigkeit von Anspruch 4, wobei die Mittel zum Ausgang (10, 21; 10, 28) einen Zirkulator (21) umfassen.

19. System (1) nach Anspruch 17 in Abhängigkeit von Anspruch 5, wobei die Mittel zum Ausgang (10, 21; 10, 28) einen Mehrfachwellenlängen-Koppler (28) umfassen.

## Claims

1. A system (1) for stabilizing the polarization of an input light beam (2'), including means (3) for optically guiding the input light beam (2'), said optical guide means (3) exhibiting a Kerr type non-linearity and the system (1) also comprising means (4) for generating a continuous pump light beam (4') the polarization of which is fixed over time and the spectrum of which is adapted to minimize the Brillouin scattering within said optical guide means (3), said generation means (4) being arranged such that the input (2') and pump (4') light beams are contra-propagating beams within the optical guide means (3)**characterized in that** said optical guide means (3) have a low polarization-mode dispersion ranging between 0.001 and 0.07 picoseconds per root kilometer.

2. The system (1) according to claim 1, wherein the generation means (4) are associated with means (5) for adapting the spectrum of the pump light beam (4') at the Brillouin scattering threshold within the optical guide means (3).

3. The system (1) according to claim 1 or 2, wherein adapting the spectrum of the pump light beam (4') consists in adjusting the width of said spectrum such as to eliminate the Brillouin scattering phenomenon within the optical guide means (3).

4. The system (1) according to any one of claims 1 to 3, wherein the input (2') and pump (4') light beams have spectrums centered on substantially equal wavelengths.

5. The system (1) according to any one of claims 1 to 3, wherein the input (2') and pump (4') light beams have spectrums centered on different wavelengths.

6. The system (1) according to any one of the preceding claims, wherein input (2') and pump (4') light beams have substantially equal mean light power.

7. The system (1) according to any one of the preceding claims, comprising means (6) for adapting the spectrum of the input light beam (2') to minimize the Brillouin scattering within the optical guide means (3).

8. The system (1) according to any one of the preceding claims, wherein the optical guide means (3) comprise at least one optical fiber (3).

9. The system (1) according to the preceding claim, wherein the optical guide means (3) comprise at least two optical fibers (3) having different characteristics.

10. The system (1) according to any one of the preceding claims, wherein the input light beam (2') is injected into an optical guide means (24), said means (24) being associated with the means (4) for generating the pump light beam (4') via a set of optical guide means.

11. The system (1) according to any one of claims 1 to 10, wherein the means (4) for generating the pump light beam (4') comprise an arrangement of amplifiers (30, 32, 35), band-pass optical filters (31, 33) and polarizers (34).

12. The system (1) according to any one of claims 1 to 10, wherein the means (4) for generating the pump light beam (4') comprise a laser source.

13. The system (1) according to any one of claims 1 to 10, wherein the means (4) for generating the pump light beam (4') comprise means (7, 25) for recovering a portion of the input light beam (2') and means (26) for polarizing said beam (2').

14. The system (1) according to any one of the preceding claims, comprising means (11, 20; 11, 27) for discharging the pump light beam after passing through the optical guide means (3).

15. The system (1) according to claim 14, when depending on claim 4, wherein the discharge means (11, 20; 11, 27) comprise a circulator (20).

16. The system (1) according to claim 14, when depending on claim 5, wherein the discharge means (11, 20; 11, 27) comprise a multi-wavelength coupler (27).

17. The system (1) according to any one of the preceding claims, comprising means (10, 21; 10, 28) for outputting the input light beam after passing through the optical guide means (3).

18. The system (1) according to claim 17, when depending on claim 4, wherein the output means (10, 21; 10, 28) comprise a circulator (21).

19. The system (1) according to claim 17, when depending on claim 5, wherein the output means (10, 21; 10, 28) comprise a multi-wavelength coupler (28).
